# EUROPEAN PATENT SPECIFICATION

(11) **EP 0 830 391 B1**
(45) Date of publication and mention of the grant of the patent: **16.06.1999**
(21) Application number: 96908385.6
(22) Date of filing: 09.04.1996
(51) Int. Cl.: C08F 10/00, C08F 4/658

(54) **METHOD FO THE PREPARATION OF A CATALYST SUITABLE FOR THE POLYMERISATION OF AN OLEFIN**
VERFAHREN ZUR HERSTELLUNG EINES KATALYSATORS FÜR OLEFINPOLYMERISATION
PROCEDE DE PREPARATION D'UN CATALYSEUR APPROPRIE POUR LA POLYMERISATION D'UNE OLEFINE

(30) Priority: 10.04.1995 WO PCT/NL95/00132
(43) Date of publication of application: 25.03.1998
(73) Proprietor: DSM N.V., 6411 TE Heerlen (NL)
(72) Inventor: ZAKHAROV, Vladimir Aleksandrovitch, Novosibirsk, 630090 (RU); BUKATOV, Gennadii Dmitrievich, Novosibirsk, 630090 (RU); SERGEEV, Sergei Andreevich, Novosibirsk, 630128 (RU)
(86) International application number: NL9600151
(87) International publication number: WO9632427

(56) References cited:
- EP-A- 0 206 817
- EP-A- 0 440 813
- FR-A- 2 392 038

## Description

The invention relates to a method for the preparation of a catalyst suitable for the polymerisation of an olefine by contacting a magnesium compound with a halogenized Ti-compound.

Such a method is known from NL-A-7805523, which discloses, amongst other things, that a catalyst suited to the polymerisation of olefines can be obtained by contacting a magnesium compound, which is obtained by reacting during one reaction step metallic magnesium with an organic halide RX, where R is an alkyl, alkenyl, aryl or cycloalkyl group containing from 1 to 20 carbon atoms, and X is a halogen, and an alkoxy group or aryloxy group-containing silane compound with a halogenized Ti-compound.

A drawback of the aforementioned method for the preparation of the catalyst is that the activity of the catalyst obtained is poor.

The aim of the invention is to obtain a method for the preparation of the catalyst in which this drawback does not occur.

The invention is characterised in that:
- the magnesium compound is obtained by:
   a) contacting metallic magnesium with an aromatic halide RX, where R is an aromatic group containing from 6 to 20 carbon atoms and X is a halogen, whereupon the dissolved reaction product I is separated from the solid residual products and then
   b) adding an alkoxy group or aryloxy group-containing silane compound to the obtained reaction product I at a temperature of from -20 to 20°C, whereupon the precipitate is purified to obtain reaction product II,
- which subsequently, during a step c, is contacted with TiCl₄ as halogenized Ti-compound and is purified to obtain a catalyst.

In this way a highly active catalyst is obtained.

A further advantage of the catalyst obtained by the process described above is that, when used for the polymerisation of propylene, this catalyst yields a polypropylene which is highly isotactic. Furthermore, the polyolefine powder produced with the catalyst of the invention contains few small particles.

From EP-A-0,319,227 a similar method is known for the production of a catalyst suitable for the polymerisation of an olefine. According to this patent publication, however, it is necessary to carry out an extra reaction step using a halogen-containing alcohol if a catalyst exhibiting good activity is to be obtained.

The first step in the process for the preparation of the catalyst of the invention is carried out by contacting metallic magnesium with an aromatic halide RX.
All forms of metallic magnesium may be used as metallic magnesium, but preferably use is made of finely divided metallic magnesium, for example magnesium powder. To obtain a fast reaction it is preferable to heat the magnesium under nitrogen prior to use. In the aromatic halide RX, R is an aromatic group preferably containing from 6 to 18 carbon atoms and X preferably is chlorine or bromine. Chlorobenzene, bromobenzene and iodinebenzene can be mentioned as examples.
Preferably chlorobenzene is used as the aromatic halide RX.

The magnesium and the aromatic halide RX are preferably brought into contact with one another in the presence of an inert dispersant and an ether. Examples of dispersants are: aliphatic, alicyclic or aromatic solvents containing 4-10 carbon atoms. Examples of ethers are: diethyl ether, diisopropyl ether, dibutyl ether, diisobutyl ether, diisoamyl ether, diallyl ether, tetrahydrofuran (THF) and anisole. It is preferred for dibutyl ether and/or diisoamyl ether to be used.
Preferably, chlorobenzene is used as dispersant. Thus, the chlorobenzene serves as dispersant as well as aromatic halide RX.
The aromatic halide/ether ratio is important with respect to obtaining an active catalyst. The chlorobenzene/dibutyl ether volume ratio may for example vary between 75:25 and 35:65.
When the chlorobenzene/dibutyl ether ratio decreases, the bulk density of the polyolefine powder prepared with the aid of the catalyst becomes lower and when the chlorobenzene/dibutyl ether ratio increases, the amount of the dissolved reaction product I becomes lower.
Consequently, the best results are obtained when the chlorobenzene/dibutyl ether volume ratio is between 70:30 and 50:50.
Small amounts of iodine and/or alkyl halides can be added to cause the reaction between the metallic magnesium and the aromatic halide RX to proceed at a higher rate.
Examples of alkyl halides are butyl chloride, butyl bromide and 1,2-dibromoethane. The reaction temperature for step a normally is between 20 and 150°C; the reaction time between 0.5 and 20 hours.

After the reaction is completed, the dissolved reaction product I is separated from the solid residual products.

During step b of the reaction, the dissolved reaction product I, obtained on carrying out step a of the reaction, is brought into contact with an alkoxy group or aryloxy group-containing silane compound. This is accomplished by adding the alkoxy group or aryloxy group-containing silane compound to the dissolved reaction product I at a temperature of from -20 to 20°C. Preferably at a temperature of from -5 to 5°C.
Preferably, reaction product I is contacted with the alkoxy group or aryloxy group-containing silane compound in the presence of an inert hydrocarbon solvent such as the solvents mentioned as dispersant in the discussion of step a. Preferably, step b is carried out with stirring. The Si/Mg molar ratio during step b may vary from 0.2 to 20. Preferably, the Si/Mg molar ratio is from 0.4 to 1.0. The product from step b is rinsed with an inert hydrocarbon solvent and then used for the preparation of the catalyst.
The following examples of alkoxy group or aryloxy group-containing silane compounds may be mentioned:
tetramethoxysilane, tetraethoxysilane, tetrabutoxysilane, tetraisobutoxysilane, tetraphenoxysilane, tetra(p-methylphenoxy)silane, tetrabenzyloxysilane, methyltrimethoxysilane, methyltriethoxysilane, methyltributoxysilane, methyltriphenoxysilane, methyltriphenoxysilane, ethyltriethoxysilane, ethyltriisobutoxysilane, ethyltriphenoxysilane, butyltrimethoxysilane, butyltriethoxysilane, butyltributoxysilane, butyltriphenoxysilane, isobutyltriisobutoxysilane, vinyl triethyoxysilane, allyltrimethoxysilane, phenyltrimethoxysilane, phenyltriethoxysilane, benzyltriphenoxysilane, methyltriallyloxysilane, dimethyldimethoxysilane, dimethyldiethoxysilane, dimethyldiisopropyloxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropyloxysilane, dibutyldibutoxysilane, dibutyldiphenoxysilane, diisobutyldiethoxysilane, diisobutyldiisobutoxysilane, diphenyldimethoxysilane, diphenyldiethoxysilane, diphenyldibutoxysilane, dibenzyldiethoxysilane, divinyl diphenoxysilane, diallyldipropoxysilane, diphenyldiallyloxysilane, methylphenyldimethoxysilane and chlorophenyldiethyoxysilane.
Preferably use is made of tetraethoxysilane.
The preparation of the catalyst is carried out by contacting, during a step c, the purified reaction product from step b with TiCl₄.

Preferably an electron donor is also present during step c. Examples of electron donors are carboxylic acids, carboxylic anhydrides, esters of carboxylic acids, halide carboxylic acids, alcohols, ethers, ketones, amines, amides, nitriles, aldehydes, alcoholates, sulphonamides, thioethers, thioesters, organic silicon compounds and organic compounds containing a heteroatom, such as nitrogen, oxygen and phosphorus.
Examples of carboxylic acids are formic acid, acetic acid, propionic acid, butyric acid, isobutanoic acid, acrylic acid, methacrylic acid, maleic acid, fumaric acid, tartaric acid, cyclohexanoic monocarboxylic acid, cis-1,2-cyclohexanoic dicarboxylic acid, phenylcarboxylic acid, toluenecarboxylic acid, naphthalene carboxylic acid, phthalic acid, isophthalic acid, terephthalic acid and trimellitic acid.
Anhydrides of the aforementioned carboxylic acids can be mentioned as examples of carboxylic anhydrides, such as acetic acid anhydride, butyric acid anhydride and methacrylic acid anhydride.
Examples of esters of carboxylic acids that can be mentioned are butyl formate, ethyl acetate, butyl acetate, ethyl acrylate, methyl methacrylate, isobutyl methacrylate, methylbenzoate, ethylbenzoate, methyl-p-toluate, ethyl-α-naphthoate, monomethyl phthalate, dibutyl phthalate, diisobutyl phthalate, diallyl phthalate and diphenyl phthalate.
Examples of halide carboxylic acids that can be mentioned are the halides of the above carboxylic acids, such as acetyl chloride, acetyl bromide, propionyl chloride, butanoyl chloride, butanoyl iodide, benzoyl bromide, p-toluyl chloride and phthaloyl dichloride.
Examples of suitable alcohols are methanol, ethanol, butanol, isobutanol, xylenol and benzyl alcohol.
Examples of suitable ethers are diethyl ether, dibutyl ether, diisoamyl ether, anisole and ethylphenyl ether, 2,2-diisobutyl-1,3-dimethoxypropane, 2,2-dicyclopentyl-1,3-dimethoxypropane and 2-ethyl-2-butyl-1,3-dimethoxypropane.
Examples of organic silicon compounds that are suitable as electron donor are: tetramethoxysilane, tetraethoxysilane, methyltrimethoxysilane, methyltributoxysilane,
ethyltriethoxysilane, phenyltriethoxysilane,
diethyldiphenoxysilane.
Examples of organic compounds containing a heteroatom are 2,2,6,6-tetramethylpiperidine, 2,6-dimethylpiperidine, 2-methylpyridine, 4-methylpyridine, imidazole, benzonitrile, aniline, diethylamine, dibutyl amine, thiophenol, 2-methylthiophene, isopropyl mercaptan, diethylthioether, diphenylthioether, tetrahydrofuran, dioxane, dimethylether, diethylether, anisole, acetone, triphenylphosphine, triphenylphosphite, diethylphosphate and diphenylphosphate.
Preferably dibutyl phthalate is used as the electron donor.
The TiCl₄/Mg molar ratio during step c preferably is between 10 and 100. Most preferably, this ratio is between 10 and 50. The molar ratio of the electron donor, if used, relative to the magnesium in step c may vary between 0.05 and 0.75. Preferably this molar ratio is between 0.1 and 0.4.
During step c use is preferably made of a solvent of an aliphatic or aromatic hydrocarbon compound. Most preferably, the solvent is toluene or chlorobenzene. The reaction temperature during step c is preferably 80-l50°C, most preferably 90-120°C. At higher or lower temperatures the activity of the catalyst of the invention is undesirably low. The obtained reaction product is purified to obtain a catalyst.

The catalyst of the invention is suitable for the preparation of polyolefines by polymerising an olefine in the presence of the catalyst and an organometallic compound containing a metal from group 1, 2, 12 or 13 of the Periodic System of the Elements (Handbook of Chemistry and Physics, 70th Edition, CRC Press, 1989-1990).
Preferably the organometallic compound is an organoaluminium compound. As the organoaluminium compound use is made of compounds having the formula RₙAlX₃₋ₙ, where X is a halogen atom, an alkoxy group or a hydrogen atom, R is an alkyl group or an aryl group and 1≤n≤3. Examples of organoaluminium compounds are trimethyl aluminium, triethyl aluminium, dimethyl aluminium chloride, diethyl aluminium chloride, diethyl aluminium iodide, diisobutyl aluminium chloride, methyl aluminium dichloride, ethyl aluminium dichloride, ethyl aluminium dibromide, isobutyl aluminium dichloride, ethyl aluminium sesquichloride, dimethyl aluminium methoxide, diethyl aluminium phenoxide, dimethylaluminium hydride and diethyl aluminium hydride. An electron donor may also be present during the polymerisation of an olefine. Examples of possible electron donors are described above with relation to the execution of step c of the preparation of the catalyst.
Preferably an alkoxysilane is used as the electron donor during the polymerisation.
The molar ratio of metal relative to Ti during the polymerisation may vary from 0.1 to 2000. Preferably this ratio is between 5 and 300. The concentration of the electron donor in the polymerisation mixture is between 0.5 and 5 mol/l.
The catalyst is suitable for the polymerisation of mono- and diolefines containing from 2 to 10 carbon atoms, such as ethylene, propylene, butylene, hexene, octene, butadiene and mixtures thereof. The catalyst is particularly suitable for the polymerisation of propylene and mixtures of propylene and ethylene.
The polymerisation can be carried out in the gas phase or in the liquid phase. In the case of polymerisation in the liquid phase a dispersing agent is present, such as n-butane, isobutane, n-pentane, isopentane, hexane, heptane, octane, cyclohexane, benzene, toluene or xylene. Liquid olefine can also be used as a dispersing agent.
The polymerisation temperature is usually between 0°C and 120°C, preferably it is between 40°C and 100°C.
The pressure during the polymerisation is normally between 0.1 and 6 MPa. The molecular weight of the polyolefine that is formed during the polymerisation is controlled by adding during the polymerisation hydrogen or any other agent known to be suitable for the purpose.
The polymerisation can be carried out in continuous mode or batchwise. The polymerisation can be carried out in several, successive steps. The polymerisation can also be carried out by first effecting the polymerisation in the liquid phase and then in the gas phase.

The invention will be further elucidated with reference to the examples without being limited hereto.

### Examples

### Example I

### Preparation of reaction product I

A three-necked flask, fitted with a reflux condenser and a funnel, was filled with magnesium powder (26 g, 1.07 mol). The flask was brought under nitrogen. The magnesium was heated at 80°C for 1 hour, after which a mixture of dibutyl ether (173 ml) and chlorobenzene (80 ml) was added. Then iodine (0.03 g) and n-chlorobutane (3 ml) were successively added to the reaction mixture. After the colour of the iodine had disappeared, the temperature was raised to 97°C and chlorobenzene (250 ml) was slowly added in 2.5 hours. The dark reaction mixture that was formed in the process was stirred for another 8 hours at 97°C. Then the stirring and heating were stopped and the solid material was allowed to settle for 48 hours. By decanting the solution above the precipitate, which contained reaction product I, a solution with a concentration of 1 mol/l of the soluble reaction product I was obtained. This solution was used in the further catalyst preparation.

### Preparation of reaction product II

The solution of reaction product I (100 ml, 1 mol/l) was dosed to a reactor. This solution was cooled to 0°C and a mixture of tetraethoxysilane (TES) (11.2 ml) and dibutyl ether (38 ml) was added, with stirring, in 2 hours.
After the solution had been added the reaction mixture was kept at 0°C for another 0.5 hour, with stirring, after which the temperature was raised to 60°C. Then the reaction mixture was kept at 60°C for 1 hour, after which the stirring and heating were stopped and the solid substance was allowed to settle in 30 minutes. The supernatant was removed by decanting. The solid substance was rinsed five times using 150 ml of heptane. A pale yellow solid substance, reaction product II (13.5 g), was obtained, suspended in 40 ml of heptane.

### Preparation of the catalyst

A reactor was brought under nitrogen and 300 ml of titanium tetrachloride was dosed into it. Then the reaction mixture was heated to 115°C. A slurry, containing 12 g of reaction product II in 36 ml of heptane, and dibutyl phthalate (7.2 ml) were added and the reaction mixture was stirred at 115°C for 2 hours. Then the stirring was stopped and solid substance was allowed to settle for 30 minutes.
The supernatant was removed by decanting, after which a mixture of titanium tetrachloride (150 ml) and chlorobenzene (150 ml) was added. The reaction mixture was again heated to 115°C and stirred for 30 min., after which the solid substance was allowed to settle for 30 minutes. This last cycle was repeated one more time. The solid substance obtained was rinsed five times using 300 ml of heptane of 60°C, after which the catalyst, suspended in heptane, was obtained.

### Polymerisation of propylene

(1) A stainless steel polymerisation reactor was inertised with nitrogen and was then filled with dry heptane free of oxygen (290 ml). Then triethyl aluminium (TEA) (1.2 mmol as a solution in 5 ml of hexane), phenyltriethoxysilane (0.06 mmol as a solution in 5 ml of hexane) and catalyst (0.01 g as a slurry in 1 ml of hexane) were dosed. Furthermore 55 nml of hydrogen was dosed and propylene was dosed until a pressure of 0.2 MPa was reached. The reactor was then quickly brought to polymerisation conditions, with stirring: temperature 70°C, pressure 0.5 MPa. The polymerisation was then allowed to take place under said conditions for 2 hours. Then the pressure was reduced to atmospheric pressure. The reactor contents were drained, after which the powder was separated from the heptane. The polypropylene powder was now dried further in a vacuum drying stove. In this way, 67.3 g of polypropylene powder was obtained (see Table 1).

### Example II

The catalyst was prepared as described in Example I. Propylene polymerisation was carried out in a stainless steel reactor that was inertised with nitrogen and was then filled with dry n-heptane free of oxygen (5.5 1). Then 8 mmol of TEA, 0.4 mmol of phenyltriethoxysilane and 0.071 g of catalyst were added as a slurry in 5 ml of n-heptane. Then the reactor was heated to 70°C. Propylene containing 2 vol.% hydrogen was dosed until a pressure of 0.8 MPa was reached for 2 hours. 1065 g of polypropylene powder was obtained (see Table 1).

### Example III

### Preparation of reaction product I

Reaction product I was prepared as described in Example I, except that diisoamyl ether was used instead of dibutyl ether.

### Preparation of reaction product II

Reaction product II was prepared as described in Example I, except that the tetraethoxysilane was added to the reactor in 70 minutes instead of in 2 hours. 14.2 g of reaction product II was obtained.

### Preparation of the catalyst

The catalyst was prepared as described in Example I, except that 150 ml of titanium tetrachloride plus 150 ml of chlorobenzene were added to the reactor instead of 300 ml of titanium tetrachloride. The slurry, containing reaction product II (12 g in 36 ml of heptane) and dibutyl phthalate (7.2 ml) were added. Thereafter the reaction mixture was heated to 115°C. The reaction mixture was kept at 115°C for 1 hour instead of 2 hours.

### Polymerisation of propylene

Propylene was polymerised as described in Example I (see Table 1).

### Example IV

### Preparation of reaction product I

Reaction product I was prepared as described in Example I, except that 32 g of magnesium powder was used instead of 26 g of magnesium powder and the reaction with chlorobenzene was carried out at 110°C instead of at 97°C. The solution obtained contained 1.67 mol/l of reaction product I.

### Preparation of reaction product II

Reaction product II was prepared as described in Example I, except that the tetraethoxysilane was added to the reactor in 80 minutes instead of in 2 hours.

### Preparation of the catalyst

The catalyst was prepared as described in Example I.

### Polymerisation of propylene

The polymerisation of propylene was carried out as described in Example I (see Table 1).

### Example V

### Preparation of reaction product I, reaction product II and the catalyst

Reaction product I, reaction product II and the catalyst were prepared as described in Example IV.

### Polymerisation of propylene

Propylene was polymerised in the gas phase in a stainless steel reactor at a constant propylene pressure and a constant temperature of 70°C, in the presence of hydrogen. 0.8 mmol of TEA as a solution in 7 ml of n-hexane, 0.04 mmol of phenyltriethoxysilane as a solution in 7 ml of n-hexane, 0.012 g of catalyst as a slurry in 1 ml of n-hexane and 55 nml of hydrogen were dosed into the reactor, after which gaseous propylene was dosed until a pressure of 1.5 atm was reached. All this was carried out at a temperature of 40°C. Then the temperature was raised to 70°C and the propylene pressure to 5 atm. The polymerisation took place for 2 hours, after which 86.4 g of polypropylene powder was obtained (see Table 1).

### Comparative Experiment A

### Preparation of reaction product I

Reaction product I was prepared as described in Example I, after which the solid substance and the solution of reaction product I were not separated.

### Preparation of reaction product II

Reaction product II was prepared as described in Example I, using the mixture of the solid substance and the solution of reaction product I as reaction product I (100 ml of slurry, 0.2 mol Mg). 23.1 g of product A was obtained.

### Preparation of the catalyst and the polymerisation of propylene

These were carried out as described in Example I (see the Table).

### ComDarative Experiment B

### Preparation of the catalyst

Reaction product II was prepared in the same way as described above in Example I. Then reaction product II' was brought into contact with 2,2,2-trichloroethanol as follows: a slurry of reaction product II (6.3 g) in heptane (50 ml) was introduced, under nitrogen, into a three-necked flask (300 ml) fitted with a reflux condenser, a stirrer and a dropping funnel. This slurry was stirred at room temperature and 2,2,2-trichloroethanol (2.0 ml, 0.02 mmol) dissolved in n-heptane (11 ml) was added in 30 minutes. After all the alcohol had been added, the total reaction mixture was stirred for one hour at 80°C. Then the solid substance was removed through filtration and was rinsed four times, at room temperature, using n-hexane (100 ml each time) and twice using toluene (100 ml each time). The final product was then treated with titanium tetrachloride and electron donor in the manner described above for the preparation of the catalyst in Example I.

### Polymerisation of propylene

Finally, a polymerisation was carried out with this product as described above for the polymerisation of propylene in Example I (see Table 1).

### Comparative Experiment C

### Preparation of reaction product II

Reaction product II was prepared as follows: a three-necked flask, fitted with a reflux condenser and a funnel, was filled with magnesium powder (6 g, 0.25 mol). The flask was brought under nitrogen, after which the magnesium was heated at 80°C for 1 hour. Then 42.4 ml of dibutyl ether (0.25 mol), 55.8 ml of tetraethoxysilane (0.25 mol), 15 ml of chlorobenzene, 2 ml of n-chlorobutane and 0.02 g of iodine were dosed.
Then the mixture was stirred at 80°C until the colour of the iodine disappeared, after which the mixture was heated to 120°C and 70 ml of chlorobenzene was added in 2 hours, after which the stirring was continued for another 4 hours at 120°C. The stirring was stopped and the solid substance was allowed to settle in 30 minutes. The supernatant was removed by decanting. The precipitate was rinsed four times using n-heptane (250 ml) of 60°C. Reaction product II was obtained, suspended in heptane.

### The preparation of the catalyst

The catalyst was prepared as described in
Example I, using the reaction product II obtained in the above reaction as reaction product II.

### Polymerisation of propylene

Propylene was polymerised as described in Example I, using the catalyst prepared as described above.

**Table I :**

| Polymerisation results | | | | | | | |
|---|---|---|---|---|---|---|---|
| *Example* | *CY* | | *APP* | *II* | *BD* | *d50* | *span* |
| | *kg of PP/g cat* | *kg of PP/g Ti* | *(wt%)* | *(wt%)* | *(kg/m*^{*3*}*)* | *(µm)* | *(d90-d10)/ d50* |
| *1* | *6.8* | *309* | *1.0* | *98.4* | *0.42* | 250 | *0.5* |
| *2* | *15.1* | *686* | *1.0* | *97.8* | *0.42* | *325* | 0.5 |
| *3* | *6.* | *246* | *0.9* | *97.2* | *0.36* | *950* | *1.5* |
| *4* | *8.1* | *289* | *1.2* | *97.8* | *0.37* | *1180* | *1.4* |
| *5* | *7.2* | *257* | *.* | *96.1* | *0.37* | *1160* | *1.4* |
| *A* | *4.8* | *267* | *1.6* | *97.2* | *0.32* | *280* | *1.8* |
| *B* | *6.7* | *279* | *1.0* | *98.5* | *0.41* | *260* | *0.5* |
| *C* | *4.1* | *227* | *1.4* | *96.8* | *0.38* | *425* | *3.3* |

### Measuring methods:

- The catalyst yield (CY) is the number of kg of propylene powder obtained per g of catalyst or per g of Ti.
- The weight percentage of atactic polypropylene (APP) was determined as follows:
   250 ml of the filtrate (y ml) obtained in separating the polypropylene powder (x g) and the hexane was dried over a steam bath and then in vacuo at 60°C.
   That yielded z g of APP.
   The total amount of APP (q g) is: (y/250)*z.
   The weight percentage of APP is: (q/(q+x))*100%.
- The isotacticity index (II) of the polypropylene powder was determined as follows: 5 g of polypropylene powder was extracted with the aid of n-heptane in a Soxhlet extractor for 4 hours. The weight percentage of the polypropylene powder that does not dissolve in the boiling n-heptane is the isotacticity index.
- The bulk density of the polypropylene powder (BD) was determined in accordance with ASTM D 1895.
- The d50 and the span were determined in accordance with ASTM D1921, method A.

## Claims

1. Method for the preparation of a catalyst suitable for the polymerisation of an olefine by contacting a magnesium compound with a halogenized Ti compound, characterized in that
- the magnesium compound is obtained by:
a) contacting metallic magnesium with an aromatic halide RX, where R is an aromatic group containing from 6 to 20 carbon atoms and X is a halide, whereupon the dissolved reaction product I is separated from the solid residual products and whereafter
b) an alkoxy group or aryloxy group-containing silane compound is added to the obtained reaction product I at a temperature of from -20 to 20°C, whereupon the precipitate formed is purified to obtain reaction product II,
- which subsequently during a step c is contacted with TiCl₄ as halogenized Ti compound and is purified to obtain a catalyst.

2. Method according to Claim 1, characterised in that an electron donor is also present in step c.

3. Method according to Claim 2, characterised in that the molar ratio of the electron donor relative to the magnesium in step c is 0.1-0.4.

4. Method according to Claim 2 or Claim 3, characterised in that the electron donor is dibutyl phthalate.

5. Method according to any one of Claims 1-4, characterised in that the aromatic halide is phenylchloride.

6. Method according to any one of Claims 1-5, characterised in that the alkoxy group or aryloxy group-containing silane compound is tetraethoxysilane.

7. Method according to any one of Claims 1-6, characterised in that the molar ratio of Si relative to the magnesium in step b is 0.4-1.0.

8. Method according to any one of Claims 1-7, characterised in that the molar ratio of TiCl₄ relative to the magnesium in step c is 10-50.

9. Method according to any one of claims 1-8, characterised in that the temperature during step c is 90-120°C.

10. Use of the catalyst obtained from the method according to any one of claims 1-9 for the polymerisation of an olefine.

11. Use according to claim 10, characterised in that the olefine is propylene.

## Patentansprüche

1. Verfahren zur Herstellung eines Katalysators, der zur Polymerisation eines Olefins geeignet ist, durch das Inberührungbringen einer Magnesium-Verbindung mit einer halogenierten Ti-Verbindung, dadurch gekennzeichnet, daß
- die Magnesium-Verbindung erhalten wird durch:
a) Inberührungbringen von metallischem Magnesium mit einem aromatischen Halogenid RX, worin R eine aromatische Gruppe mit 6 bis 20 Kohlenstoffatomen bedeutet, und X ein Halogenid darstellt, worauf das gelöste Reaktionsprodukt I von den festen Rückstandsprodukten getrennt wird, und wonach
b) eine Alkoxy-Gruppen oder Aryloxy-Gruppen enthaltende Silan-Verbindung dem erhaltenen Reaktionsprodukt I bei einer Temperatur von -20 bis 20°C zugesetzt wird, worauf der gebildete Niederschlag gereinigt wird, um das Reaktionsprodukt II zu erhalten,
- das anschließend während eines Schrittes c) mit TiCl₄ als halogenierte Ti-Verbindung in Berührung gebracht wird und gereinigt wird, wobei ein Katalysator erhalten wird.

2. Verfahren nach Anspruch 1, dadurch gekennzeichnet, daß auch ein Elektronendonator in Schritt c) vorliegt.

3. Verfahren nach Anspruch 2, dadurch gekennzeichnet, daß das Molverhältnis des Elektronendonators zum Magnesium in Schritt c) 0,1 bis 0,4 beträgt.

4. Verfahren nach Anspruch 2 oder Anspruch 3, dadurch gekennzeichnet, daß der Elektronendonator Dibutylphthalat ist.

5. Verfahren nach einem der Ansprüche 1 bis 4, dadurch gekennzeichnet, daß das aromatische Halogenid Phenylchlorid ist.

6. Verfahren nach einem der Ansprüche 1 bis 5, dadurch gekennzeichnet, daß die Alkoxy-Gruppen oder Aryloxy-Gruppen enthaltende Silan-Verbindung Tetraethoxysilan ist.

7. Verfahren nach einem der Ansprüche 1 bis 6, dadurch gekennzeichnet, daß das Molverhältnis von Si zum Magnesium in Schritt b) 0,4 bis 1,0 beträgt.

8. Verfahren nach einem der Ansprüche 1 bis 7, dadurch gekennzeichnet, daß das Molverhältnis von TiCl₄ zum Magnesium in Schritt c) 10 bis 50 beträgt.

9. Verfahren nach einem der Ansprüche 1 bis 8, dadurch gekennzeichnet, daß die Temperatur während Schritt c) 90 bis 120°C beträgt.

10. Verwendung des durch das Verfahren nach einem der Ansprüche 1 bis 9 erhaltenen Katalysators zur Polymerisation eines Olefins.

11. Verwendung nach Anspruch 10, dadurch gekennzeichnet, daß das Olefin Propylen ist.

## Revendications

1. Procédé pour la préparation d'un catalyseur approprié pour la polymérisation d'une oléfine consistant à mettre en contact un composé du magnésium avec un composé du titane halogéné, caractérisé en ce que:
- on obtient le composé de magnésium:
a) en mettant en contact le magnésium métallique avec un halogénure aromatique RX, où R est un groupe aromatique contenant de 6 à 20 atomes de carbone et X est un atome d'halogène, après quoi le produit réactionnel dissous I est séparé des produits résiduels solides; puis
b) en ajoutant un composé du silane contenant un groupe alcoxy ou aryloxy au produit réactionnel obtenu I à une température de -20 à 20°C, après quoi le précipité est purifié pour obtenir le produit réactionnel II;
- qui, ultérieurement, pendant une étape c, est mis en contact avec TiCl₄, sous forme de composé Ti halogéné et est purifié pour obtenir un catalyseur.

2. Procédé selon la revendication 1, caractérisé en ce qu'un donneur d'électrons est également présent dans l'étape c.

3. Procédé selon la revendication 2, caractérisé en ce que le rapport molaire du donneur d'électrons par rapport au magnésium dans l'étape c vaut de 0,1 à 0,4.

4. Procédé selon la revendication 2 ou 3, caractérisé en ce que le donneur d'electrons est le phtalate de dibutyle.

5. Procédé selon l'une quelconque des revendications 1 à 4, caractérisé en ce que l'halogénure aromatique est le chlorure de phényle.

6. Procédé selon l'une quelconque des revendications 1 à 5, caractérisé en ce que le composé du silane contenant un groupe alcoxy ou un groupe aryloxy est le tétraéthoxysilane.

7. Procédé selon l'une quelconque des revendications 1 à 6, caractérisé en ce que le rapport molaire de Si au rapport du magnésium dans l'étape b est de 0,4 à 1,0.

8. Procédé selon l'une quelconque des revendications 1 à 7, caractérisé en ce que le rapport molaire de TiCl₄ par rapport au magnésium dans l'étape c est de 10 à 50.

9. Procédé selon l'une quelconque des revendications 1 à 8, caractérisé en ce que la température pendant l'étape c est de 90 à 120°C.

10. Utilisation du catalyseur obtenu à partir du procédé selon l'une quelconque des revendications 1 à 9, pour la polymérisation d'une oléfine.

11. Utilisation selon la revendication 10, caractérisée en ce que l'oléfine est le propylène.
